(19) **Europäisches Patentamt**
**European Patent Office**
**Office européen des brevets**

(11) **EP 3 899 574 B1**

(12) **EUROPEAN PATENT SPECIFICATION**

(45) Date of publication and mention
of the grant of the patent:
**28.05.2025 Bulletin 2025/22**

(21) Application number: **19839611.1**

(22) Date of filing: **20.12.2019**

(51) International Patent Classification (IPC):
*G01S 7/481* (2006.01)    *G01S 17/89* (2020.01)

(52) Cooperative Patent Classification (CPC):
**G01S 7/4815; G01S 7/4813; G01S 17/87;**
**G01S 17/89; G01S 17/931**

(86) International application number:
**PCT/US2019/067796**

(87) International publication number:
**WO 2020/132417 (25.06.2020 Gazette 2020/26)**

(54) **MULTI-RANGE SOLID STATE LIDAR SYSTEM**

MEHRBEREICHS-FESTKÖRPERLIDARSYSTEM

SYSTÈME LIDAR À SEMI-CONDUCTEURS MULTIGAMME

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **21.12.2018 US 201816229284**

(43) Date of publication of application:
**27.10.2021 Bulletin 2021/43**

(73) Proprietor: **Continental Autonomous Mobility US,**
**LLC**
**Auburn Hills, Michigan 48326 (US)**

(72) Inventor: **SMITH, Elliot**
**Carpinteria, California 93101 (US)**

(74) Representative: **Continental Corporation**
**c/o Continental Automotive GmbH**
**Intellectual Property**
**Nordostpark 30**
**90411 Nürnberg (DE)**

(56) References cited:
**US-A1- 2018 067 195     US-A1- 2018 100 928**
**US-A1- 2018 106 890**

EP 3 899 574 B1

Processed by Luminess, 75001 PARIS (FR)

**Description**

BACKGROUND

A solid-state Lidar system includes a photodetector or an array of photodetectors that is essentially fixed in place relative to a carrier, e.g., a vehicle. Light is emitted into the field of view of the photodetector and the photodetector detects light that is reflected by an object in the field of view. For example, a Flash Lidar system emits pulses of light, e.g., laser light, into the field of view. The detection of reflected light is used to generate a 3D environmental map of the surrounding environment. The time of flight of the reflected photon detected by the photodetector is used to determine the distance of the object that reflected the light.

The solid-state Lidar system may be mounted to a vehicle to detect objects in the environment surrounding the vehicle and to detect distance of those objects for environmental mapping. The output of the solid-state Lidar system may be used, for example, to autonomously or semi-autonomously control operation of the vehicle, e.g., propulsion, braking, steering, etc. Specifically, the system may be a component of or in communication with an advanced driver-assistance system (ADAS) of the vehicle.

In instances where the vehicle uses both short-range and long-range fields of view to generate the 3D map of the surrounding environment, difficulties may exist in distinguishing long-range reflections and short-range reflections such that they do not influence the distance measurement of the other.

BRIEF DESCRIPTION OF THE DRAWINGS

Figure 1 is a perspective view of a vehicle with a Lidar system showing a 3D map of the objects detected by the Lidar system.

Figure 2 is a block diagram of one example of the Lidar system.

Figure 3 is a block diagram of another example of the Lidar system.

Figure 4 is a block diagram of another example of the Lidar system.

Figure 5 is a block diagram of another example of the Lidar system.

Figure 6 is a schematic of the operation of the example of Figure 2.

Figure 7 is a schematic of the operation of the example of Figure 3.

Figure 8 is a graph showing operation of first and second light sources and first and second bandwidth filters.

Figure 9 is a flow chart of a method of operating the examples of Figures 2 and 3.

Figure 10 is a schematic of the operation of the example of Figure 4.

Figure 11 is a schematic of the operation of the example of Figure 5.

Figure 12 is a method of operating the examples of Figures 4 and 5.

DETAILED DESCRIPTION

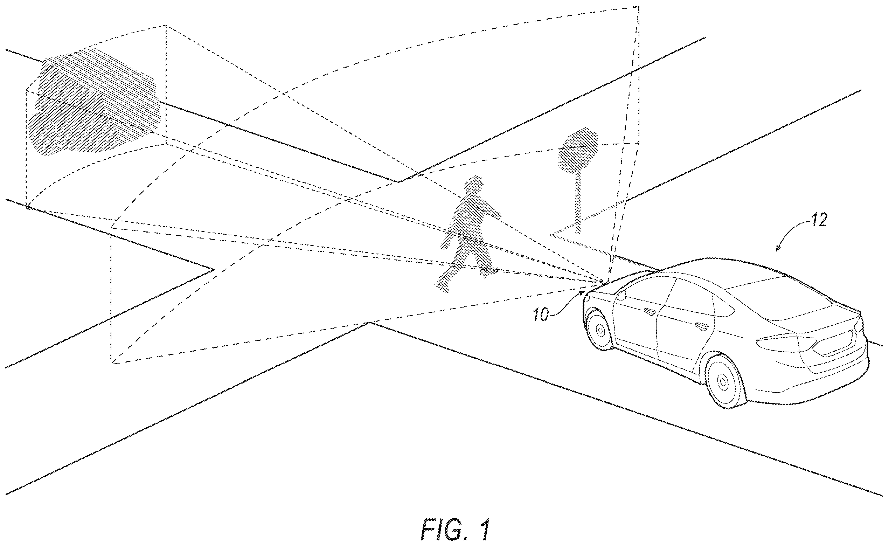

With reference to the Figures, wherein like numerals indicate like parts throughout the several views, a system 10 is generally shown. Specifically, the system 10 is a light detection and ranging (Lidar) system. With reference to Figure 1, the system 10 includes two fields of view FV1, FV2 and emits light into the fields of view FV1, FV2. The system 10 detects the emitted light that is reflected by objects in the fields of view FV1, FV2, e.g., pedestrians, street signs, vehicle 12, etc. As described below, the system 10 separately collects the reflected light from the two fields of view FV1, FV2.

The system 10 is shown in Figure 1 as being mounted to a vehicle 12. In such an example, the system 10 is operated to detect objects in the environment surrounding the vehicle 12 and to detect distance of those objects for environmental mapping. The output of the system 10 may be used, for example, to autonomously or semi-autonomously control operation of the vehicle 12, e.g., propulsion, braking, steering, etc. Specifically, the system 10 may be a component of or in communication with an advanced driver-assistance system (ADAS) of the vehicle 12. The system 10 may be mounted to the vehicle 12 in any suitable position (as one example, the system 10 is shown on the front of the vehicle 12 and directed forward). The vehicle 12 may have more than one system 10 and/or the vehicle 12 may include other object detection system 10, including other Lidar systems. The vehicle 12 is shown in Figure 1 as including a single system 10 aimed in a forward direction merely as an example. The vehicle 12 shown in the Figures is a passenger automobile. As other examples, the vehicle 12 may be of any suitable manned or un-manned type including a plane, satellite, drone, watercraft, etc.

The system 10 may be a solid-state Lidar system. In such an example, the system 10 is stationary relative to the vehicle 12. For example, the system 10 may include a casing 14 that is fixed relative to the vehicle 12 and a silicon substrate of the system 10 is fixed to the casing 14. The system 10 may be a staring, non-moving system. As another example, the system 10 may include elements to adjust the aim of the system 10, e.g., the direction of the emitted light may be controlled by, for example, optics, mirrors, etc.

As a solid-state Lidar system, the system 10 may be a Flash Lidar system. In such an example, the system 10 emits pulses of light into the fields of view FV1, FV2. More specifically, the system 10 may be a 3D Flash Lidar system 10 that generates a 3D environmental map of the surrounding environment, as shown in part in Figure 1. An example of a compilation of the data into a 3D environmental map is shown in the fields of view FV1, FV2 in Figure 1.

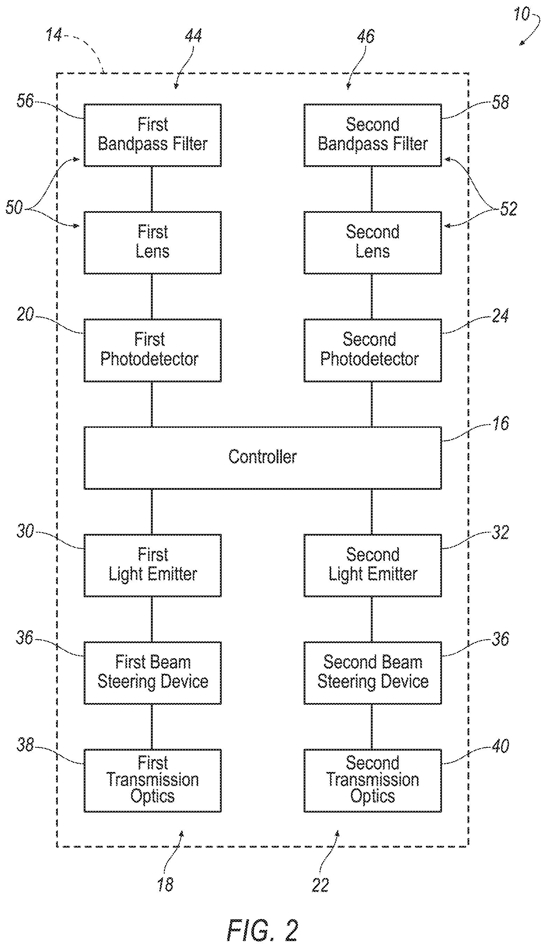

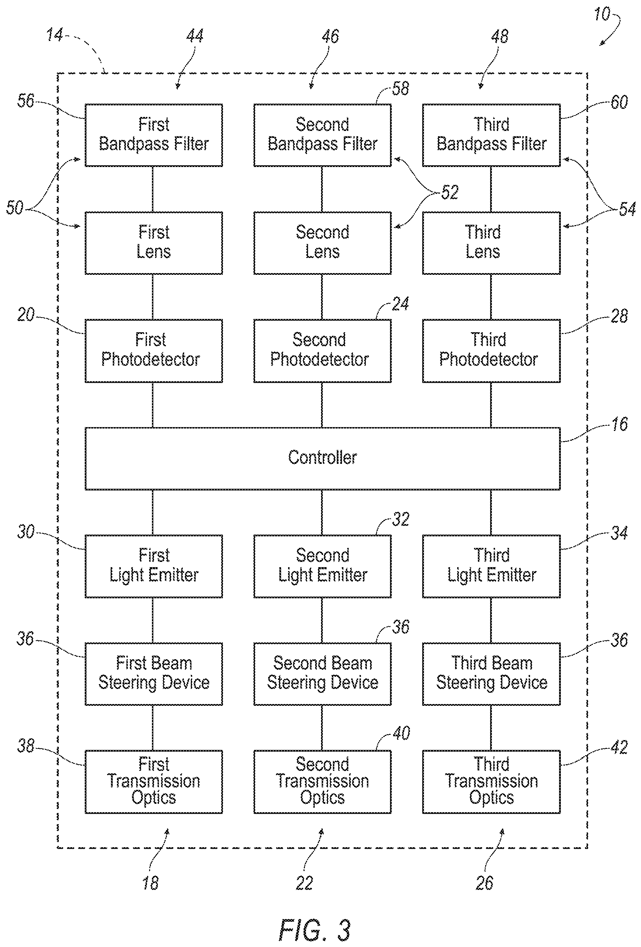

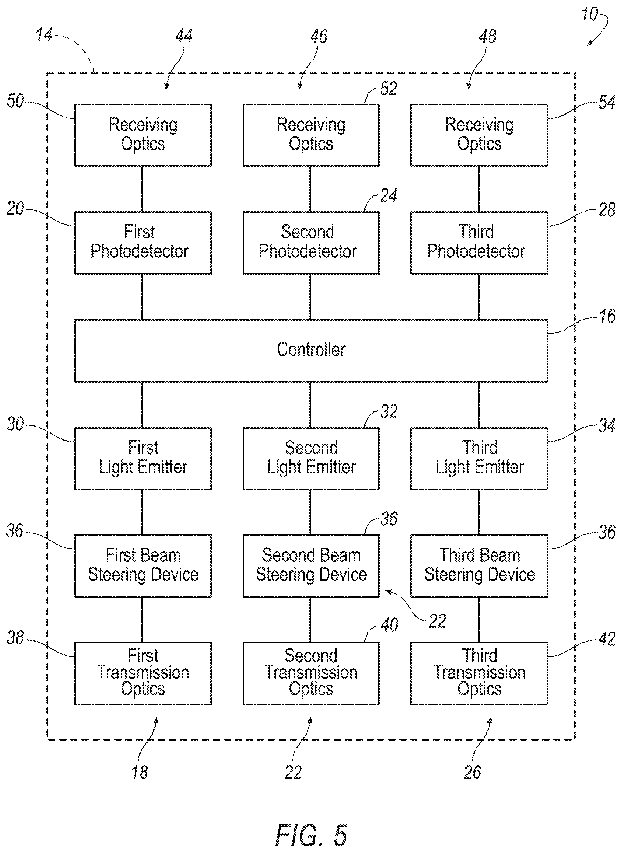

Four examples of the system 10 are shown in Figures 2-5, respectively. Common numerals are used to identify common features among the examples. With reference to Figures 2-5, the system 10 includes a system controller 16 and two pairs of light sources 18, 22 and photodetectors 20, 24. Specifically, one pair includes a first light source 18 and a first photodetector 20, and the other pair includes a second light source 22 and a second photodetector 24. As described further below, the first light source 18 emits light into the first field of view of the first photodetector 20, i.e., the first field of view FV1, and the second light source 22 emits light into the field of view of the second photodetector 24, i.e., the second field of view FV2. With reference to Figures 3 and 5, the system 10 may also include a third pair having a third light source 26 and a third photodetector 28, in which case the third light source 26 emits light into the field of view of the third photodetector 28, i.e., the third field of view FV3. The system 10 may include two or more pairs of light sources and photodetectors.

The system 10 may be a unit. In other words, the first light source 18, first photodetector 20, second light source 22, second photodetector 24, and the system controller 16 may be supported by a common substrate that is attached to the vehicle 12, e.g., a casing 14 as schematically shown in Figures 2-5. In the examples shown in Figures 3 and 5, the third light source 26 and the third photodetector 28 are supported by the casing 14. The casing 14 may, for example, enclose the other components of the system 10 and may include mechanical attachment features to attach the casing 14 to the vehicle 12 and electronic connections to connect to and communicate with electronic system 10 of the vehicle 12, e.g., components of the ADAS. The casing 14, for example, may be plastic or metal and may protect the other components of the system 10 from environmental precipitation, dust, etc. In the alternative to the system 10 being a unit, components of the system may be separated and disposed at different locations of the vehicle 12. In such examples, the system 10 may include multiple casings with each casing containing components of the system 10. As one example, one casing may including one or more of the pairs of light sources 18, 22, 26 and photodetectors 20, 24, 28 and another casing may include one or more of the pairs of light sources 18, 22, 26 and photodetectors 20, 24, 28. As another example, in addition or in the alternative, one or more of the pairs of light sources 18, 22, 26 and photodetectors 20, 24, 28 may be split among separate casings. In such examples, the system 10 may include any suitable number of casings.

The controller 16 may be a microprocessor-based controller or field programmable gate array (FPGA) implemented via circuits, chips, and/or other electronic components. In other words, the controller 16 is a physical, i.e., structural, component of the system 10. For example, the controller 16 may include a processor, memory, etc. The memory of the controller 16 may store instructions executable by the processor, i.e., processor-executable instructions, and/or may store data. The controller 16 may be in communication with a communication network of the vehicle 12 to send and/or receive instructions from the vehicle 12, e.g., components of the ADAS.

As described further below, the controller 16 communicates with the light sources 18, 22, 26 and the photodetectors 20, 24, 28. Specifically, the controller 16 instructs the first light source 18 to emit light and substantially simultaneously initiates a clock. When the light is reflected, i.e., by an object in the first field of view FV1, the first photodetector 20 detects the reflected light and communicates this detection to the controller 16, which the controller 16 uses to identify object location and distance to the object (based time of flight of the detected photon using the clock initiated at the emission of light from the first light source 18). The controller 16 uses these outputs from the first photodetector 20 to create the environmental map and/or communicates the outputs from the first photodetector 20 to the vehicle 12, e.g., components of the ADAS, to create the environmental map. Specifically, the controller 16 continuously repeats the light emission and detection of reflected light for building and updating the environmental map. While the first light source 18 and first photodetector 20 were used as examples, the controller 16 similarly communicates with second light source 22 and second photodetector 24 and with the third light source 26 and the third photodetector 28.

The light sources 18, 22, 26 emit light into the fields of view FV1, FV2, FV3, respectively, for detection by the respective photodetector when the light is reflected by an object in the respective field of view FV1, FV2, FV3. The light sources 18, 22, 26 may have similar or identical architecture and/or design. For example, the light sources 18, 22, 26 may include the same type of components arranged in the same manner, in which case the corresponding components of the light sources 18, 22, 26 may be identical or may have varying characteristics (e.g., for emission of different light wavelengths as described below).

With reference to Figures 2-5, the light sources 18, 22, 26 may each include a light emitter (i.e., a first light emitter 30, a second light emitter 32, a third light emitter 34). For example, the light emitter 30, 32, 34 may be a laser. The light emitter 30, 32, 34 may be, for example, a semiconductor laser. In one example, the light emitter 30, 32, 34 is a vertical-cavity surface-emitting laser (VCSEL). As another example, the light emitter 30, 32, 34 may be a diode-pumped solid-state laser (DPSSL). As another example, the light emitter 30, 32, 34 may be an edge emitting laser diode. The light sources 18, 22, 26 may be designed to emit a pulsed flash of light, e.g., a pulsed laser light. Specifically, the light emitter 30, 32, 34, e.g., the VCSEL, is designed to emit a pulsed laser light. The light emitted by the light emitters 30, 32, 34 may be, for example, infrared light. Alternatively, the light emitted by the light emitters 30, 32, 34 may be of any suitable wavelength, as also described further below.

As set forth above, the system 10 may be a staring, non-moving system. As another example, the system 10 may include elements to adjust the aim of the system 10. For example, with continued reference to Figures 2-5, any of the light sources 18, 22, 26 may include beam steering device 36 that direct and/or diffuse the light from the light emitter 30, 32, 34 into the respective field of view FV1, FV2, FV3. In the example shown in Figure 1, the light beams are emitted from the system 10 as horizontal lines. In such an example, the beam steering device 36 may emit the light as the horizontal beam and/or may adjust the vertical location of the light beam. While the beam steering devices 36 are shown in Figures 2-5, it should be appreciated that the beam steering devices 36 may be eliminated from Figures 2-5 in an example where the system 10 is a staring, non-moving system. In such an example, the light source 18, 22, 26, e.g., the VCSEL, exposes the entire respective field of view FV1, FV2, FV3 at once, i.e., at the same time.

In examples including the beam steering device 36, the beam steering device 36 may be a micromirror. For example, the beam steering device 36 may be a micro-electro-mechanical system 10 (MEMS) mirror. As an example, the beam steering device 36 may be a digital micromirror device (DMD) that includes an array of pixel-mirrors that are capable of being tilted to deflect light. As another example, the MEMS mirror may include a mirror on a gimbal that is tilted, e.g., by application of voltage. As another example, the beam steering device 36 may be a liquid-crystal solid-state device. While the first, second, and third beam steering devices are all labeled with reference numeral 36, it should be appreciated that the beam steering devices 36 may of the same type or different types; and in examples in which the beam steering devices 36 are of the same type, the beam steering devices 36 may be identical or may have different characteristics.

With continued reference to Figures 2-5, the system 10 includes transmission optics through which light exits the system 10. Specifically, the first light source 18 includes first transmission optics 38 through which light emitted by the first light emitter 30 exits the system 10 into the first field of view FV1 and second transmission optics 40 through which light emitted by the second light emitter 32 exits the system 10 into the second field of view FV2. The third light source 26 includes third transmission optics 42 through which light emitted by the third light emitter 34 exits the system 10 into the third field of view FV3. The transmission optics 38, 40, 42 may include any suitable number of lenses. The transmission optics 38, 40, 42 may have similar or identical architecture and/or design. For example, the transmission optics 38, 40, 42 may include the same type of components arranged in the same manner, in which case the corresponding components of the transmission optics 38, 40, 42 may be identical or may have varying characteristics (e.g., for emission of different light wavelengths as described below).

The first light source 18 is aimed at the first field of view FV1 and the second light source 22 is aimed at the second field of view FV2. Specifically, the system 10 emits light from the first light source 18 into a first field of illumination and emits light from the second light source 22 into a second field of illumination. In the examples shown in Figures 3 and 5, the third light source 26 is aimed at the third field of view FV3. The field of illumination is the area exposed to light emitted from the light sources 18, 22, 26. The first field of illumination may substantially match the first field of view FV1 and the second field of illumination may substantially match the second field of view FV2 ("substantially match" is based on manufacturing capabilities and tolerances of the light sources 18, 22, 26 and the photodetectors 20, 24, 28), as is the case shown for example in Figure 1. The first field of illumination and the second field of illumination may overlap, as described further below. In the examples shown in Figures 3 and 5, the second field of illumination and the third field of illumination may overlap, as described further below.

With continued reference to Figures 2-5, the system 10 includes a first receiving unit 44 and a second receiving unit 46. In the examples shown in Figures 3 and 5, the system 10 may include a third receiving unit 48. The first receiving unit 44 includes the first photodetector 20 and may include first receiving optics 50. The second receiving unit 46 includes the second photodetector 24 and may include second receiving optics 52. The third receiving unit 48 includes the third photodetector 28 and may include third receiving optics 54.

For the purposes of this disclosure, the term "photodetector" includes a single photodetector or an array of photodetectors, e.g., an array of photodiodes. The photodetectors 20, 24, 28 may be, for example, avalanche photodiode detectors. As one example, the photodetectors 20, 24, 28 may be a single-photon avalanche diode (SPAD). As another example, the photodetectors 20, 24, 28 may be a PIN diode. The photodetectors 20, 24, 28 may have similar or identical architecture and/or design. For example, the photodetectors 20, 24, 28 may include the same type of components arranged in the same manner, in which case the corresponding components of the photodetectors 20, 24, 28 may be identical or may have varying characteristics.

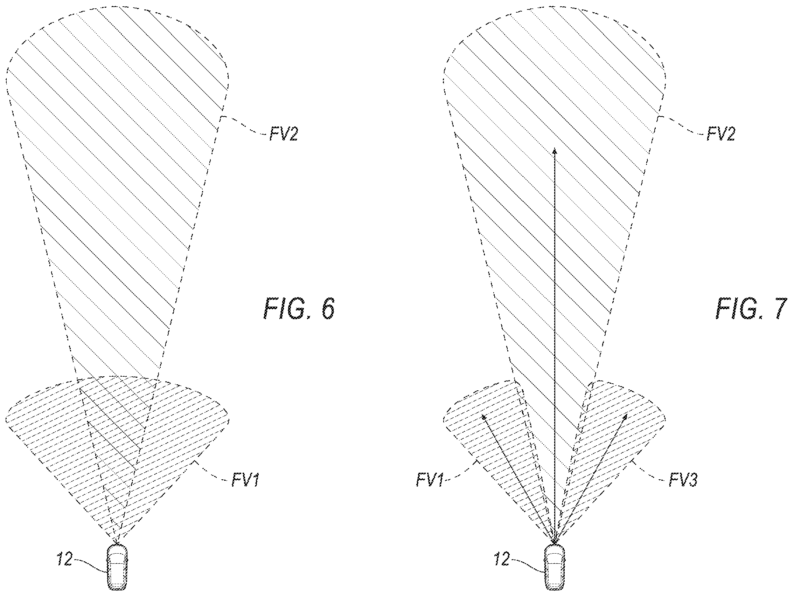

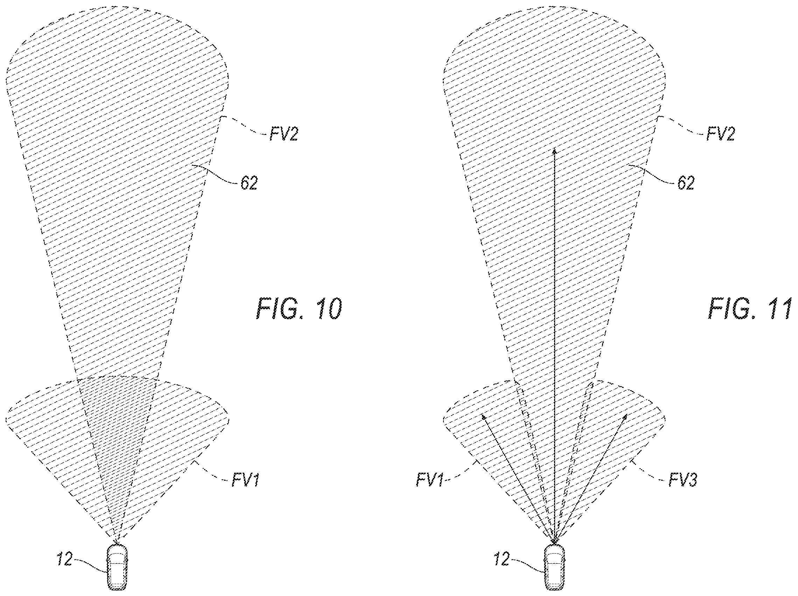

The first field of view FV1 is the area in which reflected light may be sensed by the first photodetector 20, the second field of view FV2 is the area in which reflected light may be sensed by the second photodetector 24, and the third field of view FV3 is the area in which reflected light may be sensed by the third photodetector 28. The first field of view FV1 and the second field of view FV2 may overlap. In other words, as least part of the first field of view FV1 and at least part of the second field of view FV2 occupy the same space such that an object in the overlap will reflect light toward both photodetectors 20, 24. For example, as shown in Figures 6 and 10, the first field of view FV1 and the second field of view FV2 may be centered on each other, i.e., aimed in substantially the same direction ("substantially the same" is based on manufacturing capabilities and tolerances of the light sources 18, 22, 26 and the photodetectors 20, 24, 28). In the examples shown in Figures 7 and 11, the first field of view FV1 and the second field of view FV2 may be aimed in different directions while overlapping. With continued reference to Figures 7 and 11, the second field of view FV2 and third field of view FV3 may overlap. In Figures 7 and 11, the second field of view FV2 and the third field of view FV3 may be aimed in different directions while overlapping. In the example shown in Figures 7 and 11, the first field of view FV1, the second field of view FV2, and the third field of view FV3 are each aimed in a different direction.

The fields of view FV1, FV2, FV3 may have different widths and/or lengths. In the examples shown in Figures 6 and 10, the length of the first field of view FV1 is shorter than the length of the second field of view FV2. In other words, the first photodetector 20 has a short range and the second photodetector 24 has a long range. In the examples shown in Figures 6 and 10, the first field of view FV1 is wider than the second field of view FV2.

Light reflected in the fields of view FV1, FV2, FV3 is reflected to receiving optics 50, 52, 54. The receiving optics 50, 52, 54 may include any suitable number of lenses, filters, etc.

The system 10 may distinguish between the reflected light that was emitted by the first light source 18 and reflected light that was emitted by the second light source 22 based on differences in wavelength of the light. For example, with reference to Figures 2 and 3, the first light source 18 and the second light source 22 may emit light having different wavelengths $\lambda 1$, $\lambda 2$ and the first receiving unit 44 and the second receiving unit 46 may detect light having different wavelengths $\lambda 1$, $\lambda 2$. In other words, the first receiving unit 44 may be designed to detect the wavelength $\lambda 1$ of light that was emitted from the first light source 18 and reflected by a reflecting surface in the first field of view FV1 (and detect little or no light at wavelength $\lambda 2$ emitted from the second light source 22) and the second receiving unit 46 may be designed to detect wavelength $\lambda 2$ of the light that was emitted from the second light source 22 and reflected by a reflecting surface in the second field of view FV2 (and detect little or no light at wavelength $\lambda 1$ emitted from the first light source 18).

Similarly, the third receiving unit 48 may be designed to detect light that was emitted from the third light source 26 at a third wavelength $\lambda 3$ and reflected by a reflecting surface in the third field of view FV3 (and detect little or no light emitted at wavelengths $\lambda 1$, $\lambda 2$ from the first light source 18 and the second light source 22). As another example, the third receiving unit 48 may be designed to detect light that was emitted from the third light source 26 at the first wavelength $\lambda 1$ and reflected by a reflecting surface in the third field of view FV3. In such an example, the first receiving unit 44 and the third receiving unit 48 are pointed in different directions such that the first and third fields of view FV1, FV3 do not overlap (see Fig. 7).

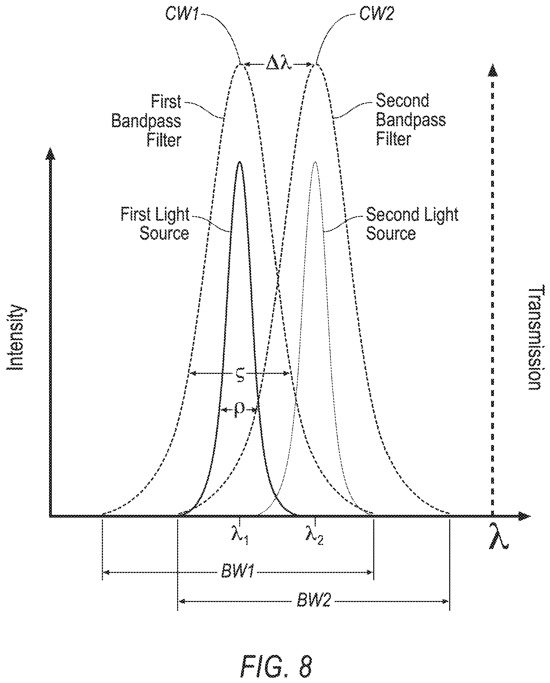

Figure 6 is a schematic showing the operation of the example shown in Figure 2 and Figure 7 is a schematic showing the operation of the example, shown in Figure 3. As set forth above, with reference to Figures 6 and 7, the first light source 18 is designed to emit light having a first wavelength $\lambda 1$ (see Fig. 8) and the second light source 22 is designed to emit light having a second wavelength $\lambda 2$ (see Fig. 8). First wavelength $\lambda 1$ and second wavelength $\lambda 2$ are different. In addition, the first receiving unit 44 transmits light at the first wavelength $\lambda 1$, i.e., light reflected in the first field of view FV1, and filters out light at the second wavelength $\lambda 2$, and the second receiving unit 46 transmits light at the second wavelength $\lambda 2$, i.e., light reflected in the second field of view FV2, and filters out light at the first wavelength $\lambda 1$. Using this filtering, the system is able to distinguish between reflections in the first and second fields of view FV1, FV2.

With reference to Figures 2 and 3, the first light source 18, the second light source 22, the third light source 26 may be designed to emit light at the desired wavelength. As an example, the first light emitter 30, the second light emitter 32, and the third light emitter 34 may be designed to generate and emit light at the desired wavelength. As another example in addition or in the alternative to the design of the light emitters 30, 32, 34, the transmitting optics may include bandpass filters that filter the light emitted from the light emitters 30, 32, 34 to the desired wavelength.

With reference to Figures 2 and 3, the first receiving optics 50 may include a first bandpass filter 56 and the second receiving optics 52 may include a second bandpass filter 58. With reference to Figure 3, the third receiving optics 54 may include a third bandpass filter 60. The bandpass filters 56, 58, 60 are optical filters, i.e., physical elements that are at least part of the receiving optics 50, 52, 54. In the examples shown in Figures 2 and 3, the first bandpass filter 56 covers the first photodetector 20 and the second bandpass filter 58 covers the second photodetector 24, i.e., reflected light entering the system 10 travels through at least one of the bandpass filters. With reference to Figure 3, the third bandpass filter 60 covers the third photodetector 28. The bandpass filters 56, 58, 60 may be narrow-bandpass filters.

Figure 8 shows operation of the bandpass filters 56, 58. Figure 8 shows the wavelength curves of the light emitted from the first light source 18 and the second light source 22 shown in solid lines. The dotted lines show the wavelength curve of the first bandpass filter 56 having a first bandwidth BW1 and the second bandpass filter having a second bandwidth BW2. The first bandpass filter 56 is designed to transmit light in the first bandwidth BW1 (and attenuate outside the first bandwidth BW1) and the second bandpass filter 58 designed to transmit light in a second bandwidth BW2 (and attenuate outside the second bandwidth BW2). The wavelength range of light emitted from the first light source 18 is in the first bandwidth BW1 and the wavelength range of light emitted from the second light source 22 is in the second bandwidth BW2. In other words, the first light source 18 is designed to emit light in the first bandwidth BW1 and the second light source 22 is designed to emit light in the second bandwidth BW2. For example, in Figure 8 both the wavelength curve of light emitted from the first light source 18 and the wavelength curve of the first bandpass filter 56 have a center wavelength at $\lambda 1$ and the first bandwidth BW1 is larger than the range of wavelengths emitted by the first light source 18. Similarly, both the wavelength curve of light emitted from the second light source 22 and the wavelength curve of the second bandpass filter 58 have a center wavelength at $\lambda 2$ and the first bandwidth BW2 is larger than the range of wavelengths emitted by the second light source 22. In the example shown in Figure 8, the center wavelength of the wavelength curve emitted from the first light source 18 is outside the second bandwidth BW2, and the center wavelength of the wavelength curve emitted from the second light source 22 is outside the first bandwidth BW1.

In the example shown in Figure 8, the light sources 18, 22 and bandpass filters 56, 58 are designed such that the difference between the center wavelength CW2 (i.e., at peak transmission) of the wavelength curve second bandwidth BW2 and the center wavelength CW1 (i.e., at peak transmission) of the second bandwidth BW1 plus the full-width half-maximum of the wavelength curve of light emitted from the first light source 18 is greater than the full-width half-maximum of the curve of the first bandpass filter 56.

In other words, the light sources 18, 22 and the bandpass filters 56, 58 may be designed according the following relationship:

$$\Delta\lambda + \rho > \varsigma$$

where

CW1 = center wavelength of light transmitted by first bandpass filter 56;
CW2 = center wavelength of light transmitted by the second bandpass filter 58;
$\Delta\lambda$ = CW1 - CW2;
$\rho$ = FWHM of wavelength curve emitted by first or second light source 18, 22; and
$\varsigma$ = FWHM of wavelength curve of the bandpass filter 56, 58 covering the first or second photodetector 20, 24.

This relationship reduces cross-talk, e.g., the first photodetector 20 detecting reflected light generated by the second light source 22 and the second photodetector 24 detecting reflected light generated by the first light source 18. Any remaining "false signals" from cross-talk data points may be removed, for example, by using histogramming.

While the first and second light sources 18, 22 and bandpass filters 56, 58 are described above, the relationship between the second light source 22 and the third light source 26 may be similar or identical to that described above. As one example, with reference to Figure 7, the first and third light source 22, 26 may be identical and first and third bandpass filters 56, 60 may be identical.

In such examples shown in Figures 2, 3, 6, and 7, the relationship described above allows for light to be emitted substantially simultaneously from the first light source 18 and the second light source 22 (and the third light source 26 in the example in Figures 3 and 7). In other words, the controller 16 may be programmed to emit light substantially simultaneously from the first light source 18 and the second light source 22 (and the third light source 26 in the example in Figures 3 and 7). In other words, the controller 16 may substantially simultaneously instruct the first light source 18 to emit light and the second light source 22 to emit light and substantially simultaneously initiate a clock for both or each photodetector 20, 24, 28 (and similarly for the third light source 26 in the example in Figures 3 and 7). "Substantially simultaneously" is based on given manufacturing capabilities and tolerances of the light sources 18, 22, 26 and the photodetectors 20, 24, 28.

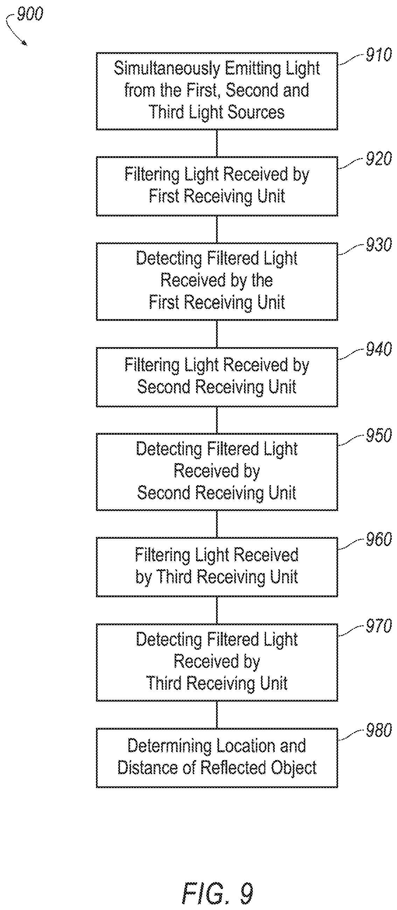

Figure 9 shows an example method 900 of operation of the system 10 in Figures 2 and 3. As shown in block 910, the method includes emitting light from the first light source 18 and the second light source 22. Specifically, the method may include substantially simultaneously emitting light from the first light source 18 and the second light source 22. In the example of Figure 3, the method may also include substantially simultaneously emitting light from the third light source 26. In other words, the controller 16 instructs the first light source 18 and the second light source 22 (and the third light source 26 in Figure 3) to emit light substantially simultaneously.

Specifically, block 910 may include emitting light from the first light source 18 at the first wavelength $\lambda 1$ that is within the first bandwidth BW1, i.e., the bandwidth transmitted by the first bandpass filter 56, and may include emitting light from the second light source 22 at the second wavelength λ2 that is within the second bandwidth BW2, i.e., the bandwidth transmitted by the second bandpass filter 58. The difference between the second wavelength λ2 and the first wavelength λ1 plus the full-width half-maximum of the waveform of the light emitted from the first light source 18 is greater than the full-width half-maximum of the first bandpass filter 56.

As also described above, block 910 may include emitting light from the first light source 18 and the second light source 22 as pulsed laser light. Similarly, for the example shown in Figure 3, block 910 may include emitting light from the third lights source as pulsed laser light.

With continued reference to Figure 9, block 920 includes filtering to the first bandwidth BW1, i.e., attenuating light outside the first bandwidth BW1, light that is emitted by the first light source 18 and reflected by a reflecting surface. Specifically, the light emitted by the first light source 18 and reflected at the first receiving unit 44 may be filtered with the first bandpass filter 56, as described above. In block 930, the method includes detecting light that is filtered to the first bandwidth BW1. Specifically, this filtered light is detected by the first photodetector 20, as described above. Said differently, the first photodetector 20 may detect light in the first bandwidth BW1 transmitted by the first bandpass filter 56.

With continued reference to Figure 9, block 940 includes filtering to the second bandwidth BW2, i.e., attenuating light outside the second bandwidth BW2, light that is emitted by the second light source 22 and reflected by a reflecting surface. Specifically, the light emitted by the second light source 22 and reflected at the second receiving unit 46 may be filtered with the second bandpass filter 58, as described above. In block 950, the method includes detecting light that is filtered to the second bandwidth BW2. Specifically, this filtered light is detected by the second photodetector 24, as described above. Said differently, the second photodetector 24 may detect light in the second bandwidth BW2 transmitted by the second bandpass filter 58.

With continued reference to Figure 9, block 960 includes filtering to the third bandwidth light that is emitted by the third light source 26 and reflected by a reflecting surface. Specifically, the light emitted by the third light source 26 and reflected at the third receiving unit 48 may be filtered with the third bandpass filter 60, as described above. In block 970, the method includes detecting light that is filtered to the third bandwidth. Specifically, this filtered light is detected by the third photodetector 28, as described above. Said differently, the third photodetector 28 may detect light in the third bandwidth transmitted by the third bandpass filter 60.

In block 980, the method includes determining the location and distance of the object that reflected light back to the system 10. Block 980 may include eliminating or reducing "false signals" due to cross-talk, as described above. This may be accomplished, for example, by histogramming. Block 980 may be performed by the controller 16 or by another component of the vehicle 12, e.g., another component of the ADAS.

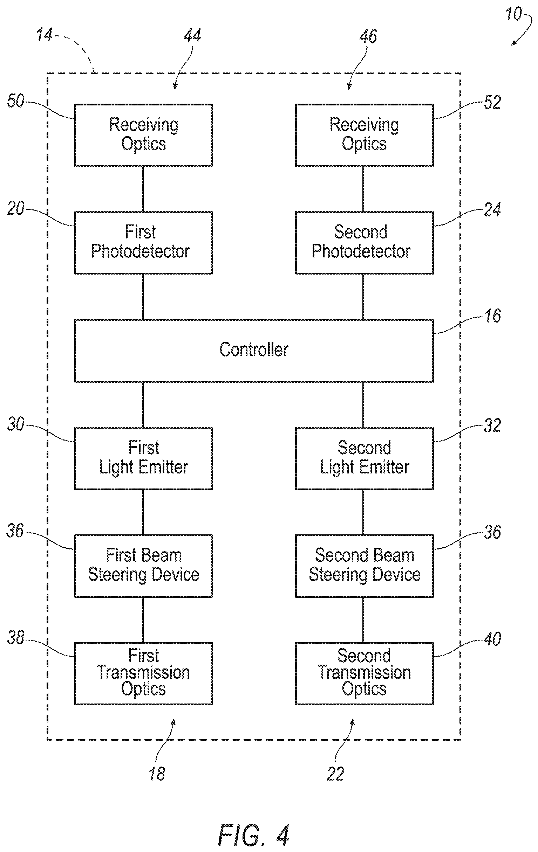

Figures 4 and 5 show two examples of the system 10 that distinguishes between the reflected light in the first field of view FV1 in the second field of view FV2. Specifically, the controller 16 controls the timing of emission of light and collection of light to distinguish between reflected light in the first field of view FV1 and in the second field of view FV2, i.e., is temporally based.

Figure 10 is a schematic showing the operation of the example shown in Figure 4 and Figure 11 is a schematic showing the operation of the example shown in Figure 5. With reference to Figures 4 and 5, the controller 16 is programmed to substantially simultaneously emit a pulse of light from the first light source 18 and the second light source 22. With reference to Figure 5, the controller 16 is programmed to emit a pulse of light from the third light source 26 substantially simultaneously with the first light source 18 and the second light source 22.

The controller 16 is programmed to, during a first time period, activate the first photodetector 20 and deactivate the second photodetector 24 and, during a second time period, activate the second photodetector 24 and deactivate the first photodetector 20. Specifically, the second time period initiates after the first time period and extends beyond the first time period. With reference to Figure 10, the first field of view FV1 is shorter than the second field of view FV2, as described above, i.e., the first photodetector 20 is short range and the second photodetector 24 is long range). Accordingly, the time of flight of photons emitted from the second light source 22 to the second field of view FV2 will be greater than the first light source 18 to the first field of view FV1. Thus, when the first photodetector 20 is activated and the second photodetector 24 is deactivated during the first time period, the first photodetector 20 detects light reflected in the first field of view FV1, including the light emitted by the first light source 18 (which is returning to the system 10 during the first time period). When the first photodetector 20 is deactivated and the second photodetector 24 is activated during the second time period, the second photodetector 24 detects the light reflected in the portion 62 (identified in Figs. 10 and 11) of the second field of view FV2 that extends beyond the first field of view FV1, i.e., the light emitted by the second light source 22. The activation/deactivation of the first and second photodetectors 20, 24 allows the second photodetector 24 to detect the light emitted by the second light source 22 (which is returning to the system 10 during the second time period) and not the first light source 18 (which has already returned to the system 10). Said differently, short-range detection occurs during the first time period and long-range detection occurs during the second time period. For the purposes of this disclosure, an "activated" photodetector detects light and outputs corresponding data and a "deactivated" photodetector does not detect light or output corresponding data, e.g., is unpowered.

The first time period may initiate simultaneously with emission of light from the first and second light sources 18, 22. The second time period initiates after the first time period and extends beyond the first time period. The first time period and the second time period overlap. In such an example, the first time period may begin with the simultaneous emission of light from the first and second light source 18, 22, the second time period subsequently begins, the first time period subsequently ends, and the second time period subsequently ends. This timing reduces cross-talk, e.g., the first photodetector 20 detecting reflected light generated by the second light source 22, and the second photodetector 24 detecting reflected light generated by the first light source 18. Any remaining "false signals" from cross-talk data points may be removed by using histogramming. The light emitted from the first and second light sources 18, 22 may be the same or different wavelengths.

With reference to Figures 5 and 11, the controller 16 may be programmed to, during the first time period, activate the third photodetector 28. In such an example, the first photodetector 20 and the photodetector simultaneously detect reflected light. In the example shown in Figure 11, the first photodetector 20 and the third photodetector 28 may be aimed in different directions such that the first field of view FV1 and the third field of view FV3 do not overlap. The light emitted from the first and third light sources 26 may be the same or different wavelengths.

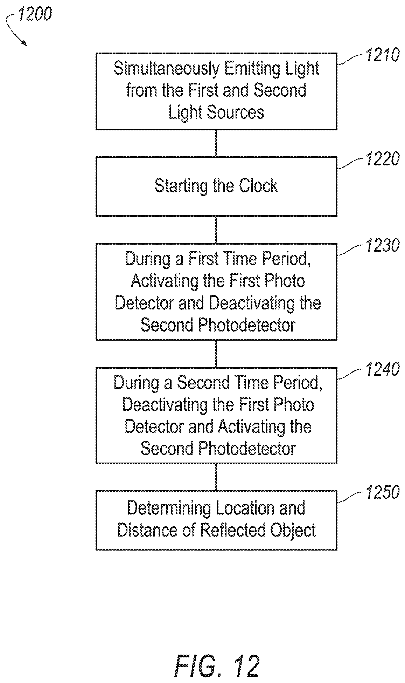

Figure 12 shows an example method 1200 of operation the system 10 in Figures 4 and 5. As shown in block 1210, the method includes emitting light from the first light source 18 and the second light source 22. Specifically, the method may include substantially simultaneously emitting light from the first light source 18 and the second light source 22. In the example of Figure 5, the method may also include substantially simultaneously emitting light from the third light source 26. In other words, the controller 16 instructs the first light source 18 and the second light source 22 (and the third light source 26 in Figure 3) to emit light substantially simultaneously. Specifically, block 1210 may include emitting light from the first light source 18 into first field of view FV1 and simultaneously emitting light from the second light source 22 into the second field of view FV2 that overlaps the first field of view FV1.

In block 1220, a clock is started. For example, the controller 16 starts the clock and the first and second time periods are based on the clock. The controller 16 may start the clock at the simultaneous emission of light from the first and second light source 18, 22. The clock is used to determine the time of flight of reflected photons detected by the photodetectors 20, 24, 28 to determine distance of the object that reflected the light.

In block 1230, the method includes, during the first time period, activating the first photodetector 20 and deactivating the second photodetector 24. As described above, during the first time period, the first photodetector 20 is detecting photons reflected in the first field of view FV1 and not photons reflected in the portion 62 of the second field of view FV2 that extends beyond the first field of view FV1 because the reflected photons in the portion 62 of the second field of view FV2 do not return within the first time period. In other words, short-range detection occurs during the first time period.

Block 1230 may include, during the first time period, activating the third photodetector 28. As described above, in such an example, the first photodetector 20 may detect photons reflected in the first field of view FV1 simultaneously with the detection of photons reflected in the third field of view FV3 by the third photodetector 28. In such an example, e.g., Figure 11, the first and third field of views FV1, FV3 are aimed in different directions.

In block 1240, the method includes, during the second time period, deactivating the first photodetector 20 (and deactivating the third photodetector 28 in examples including the third photodetector 28) and activating the second photodetector 24. As described above, during the second time period, the second photodetector 24 is detecting photons reflected in the portion 62 of the second field of view FV2 that extends beyond the first field of view FV1 because the reflected photons from the first field of view FV1 have returned before the second time period and the reflected photons from the portion 62 of the second field of view FV2 that extends beyond the first field of view FV1 return during the second time period. In other words, long-range detection occurs during the second time period.

In block 1250, the method includes determining the location and distance of the object that reflected light back to the system 10. Block 1250 may include eliminating or reducing "false signals" due to cross-talk, as described above. This may be accomplished, for example, by histogramming. Block 1250 may be performed by the controller 16 or by another component of the vehicle 12, e.g., another component of the ADAS.

The disclosure has been described in an illustrative manner, and it is to be understood that the terminology which has been used is intended to be in the nature of words of description rather than of limitation. Many modifications and variations of the present disclosure are possible in light of the above teachings, and the disclosure may be practiced otherwise than as specifically described.

**Claims**

1. A system (10) comprising:

   a first photodetector (20) having a first field of view (FV1);
   a second photodetector (24) having a second field of view (FV2) overlapping the first field of view;
   a first light source (18) aimed at the first field of view (FV1);
a second light source (22) aimed at the second field of view (FV2); and
a first bandpass filter (56) covering the first photodetector (20) and a second bandpass filter (58) covering the second photodetector (24), the first bandpass filter (56) designed to transmit light in a first bandwidth (BW1) and the second bandpass filter (58) designed to transmit light in a second bandwidth (BW2) different than the first bandwidth (BW1),
wherein the first light source (18) is designed to emit light having a first wavelength ($\lambda$1) in the first bandwidth (BW1) and the second light source (22) is designed to emit light having a second wavelength ($\lambda$2) in the second bandwidth (BW2).

2. The system (10) of claim 1, wherein a difference between the center wavelength of a wavelength curve of the second bandpass filter (58) and the center wavelength of a wavelength curve of the first bandpass filter (56) plus the full-width half-maximum of the wavelength curve of the light emitted from the first light source (20) is greater than the full-width half-maximum of the wavelength curve of the first bandpass filter (56).

3. The system (10) of claim 1, wherein the first and second light sources (18, 22) are designed to emit pulsed laser light.

4. The system (10) of claim 1, wherein the first field of view (FV1) is wider than second field of view (FV2).

5. The system (10) of claim 4, wherein the first field of view (FV1) is shorter than second field of view.

6. The system (10) of claim 1, wherein the first receiving unit and the second receiving unit are on a vehicle.

7. The system (10) of claim 1, wherein the first field of view (FV1) and the second field of view (FV2) are aimed in substantially the same direction.

8. The system (10) of claim 1, further comprising a controller (16) programmed to emit light simultaneously from the first light source (18) and the second light source (22).

9. The system (10) of claim 1, further comprising a casing (14) supporting the first and second photodetectors (20, 24), the first and second light sources (18, 22), and the first and second bandpass filters (56, 58).

10. A method (900) comprising:

emitting (910) light from a first light source (18) aimed at a first field of view (FV1) of a first photodetector and wherein the light is emitted at a first wavelength ($\lambda$1);
emitting (910) light from a second light source (22) aimed at a second field of view (FV2) of a second photodetector and wherein the light is emitted at a second wavelength ($\lambda$2) and wherein the second field of view (FV2) overlaps the first field of view (FV1),
filtering (920), by a first bandpass filter (56) covering the first photodetector, to a first bandwidth (BW1) light that is emitted by the first light source (18) and reflected by a reflecting surface, wherein the first wavelength ($\lambda$1) is in the first bandwidth (BW1);
filtering (940), by a second bandpass filter (58) covering the second photodetector to a second bandwidth (BW2) light that is emitted by the second light source (22) and reflected by a reflecting surface, wherein the second wavelength ($\lambda$2) is in the second bandwidth (BW2), the second bandwidth (BW2) being different than the first bandwidth (BW1),
with the first photodetector (20), detecting (930) light in the first bandwidth (BW1) transmitted by the first bandpass filter (56); and
with the second photodetector (24), detecting light in the second bandwidth (BW2) transmitted by the second bandpass filter (58).

11. The method (900) as set forth in claim 10, wherein emitting (910) light from the first light source (18) and emitting (910) light from the second light source (22) are substantially simultaneous.

12. The method (900) of claim 10, wherein a difference between the center wavelength of a wavelength curve of the second bandpass filter (58) and the center wavelength of a wavelength curve of the first bandpass filter (56) plus the full-width half-maximum of the wavelength curve of the light emitted from the first light source (18) is greater than the full-width half-maximum of the wavelength curve of the first bandpass filter (56).

13. The method (90) of claim 10, wherein the first light source (18) and the second light source (22) emit pulsed laser light.

14. A system (10) according to any one of claims 1 to 7 or claim 9, further comprising:
a controller (16) programmed to:

substantially simultaneously emit a pulse of light from the first light source and the second light source;
during a first time period, activate the first photodetector and deactivate the second photodetector; and

during a second time period, activate the second photodetector and deactivate the first photodetector, the second time period initiating after the first time period.

15. The system (10) of claim 14, wherein the first time period initiates simultaneously with emission of light from the first and second light sources (18, 22).

16. The system of claim 14, wherein the first time period and the second time period overlap.

17. The method (900) of claim 11, further comprising: during a first time period, activating the first photodetector (20) and deactivating the second photodetector (24).

18. The method (900) as set forth in claim 17, wherein the first time period initiates simultaneously with emission of light from the first and second light sources (18, 22).

19. The method (900) as set forth in claim 17, wherein the first time period and the second time period overlap.

**Patentansprüche**

1. System (10), Folgendes aufweisend:

einen ersten Fotodetektor (20) mit einem ersten Sichtfeld (FV1);
einen zweiten Fotodetektor (24) mit einem zweiten Sichtfeld (FV2), welches das erste Sichtfeld überlappt;
eine erste Lichtquelle (18), die auf das erste Sichtfeld (FV1) gerichtet ist;
eine zweite Lichtquelle (22), die auf das zweite Sichtfeld (FV2) gerichtet ist; und
ein erstes Bandpassfilter (56), das den ersten Fotodetektor (20) bedeckt, und ein zweites Bandpassfilter (58), das den zweiten Fotodetektor (24) bedeckt, wobei das erste Bandpassfilter (56) dazu ausgelegt ist, Licht in einer ersten Bandbreite (BW1) hindurchzulassen, und das zweite Bandpassfilter (58) dazu ausgelegt ist, Licht in einer zweiten Bandbreite (BW2) hindurchzulassen, die sich von der ersten Bandbreite (BW1) unterscheidet, wobei die erste Lichtquelle (18) dazu ausgelegt ist, Licht mit einer ersten Wellenlänge ($\lambda$1) in der ersten Bandbreite (BW1) zu emittieren, und die zweite Lichtquelle (22) dazu ausgelegt ist, Licht mit einer zweiten Wellenlänge ($\lambda$2) in der zweiten Bandbreite (BW2) zu emittieren.

2. System (10) nach Anspruch 1, wobei eine Differenz zwischen der Mittenwellenlänge einer Wellenlängenkurve des zweiten Bandpassfilters (58) und der Mittenwellenlänge einer Wellenlängenkurve des ersten Bandpassfilters (56) plus der Halbwertsbreite der Wellenlängenkurve des von der ersten Lichtquelle (20) emittierten Lichts größer als die Halbwertsbreite der Wellenlängenkurve des ersten Bandpassfilters (56) ist.

3. System (10) nach Anspruch 1, wobei die erste und die zweite Lichtquelle (18, 22) dazu ausgelegt sind, gepulstes Laserlicht zu emittieren.

4. System (10) nach Anspruch 1, wobei das erste Sichtfeld (FV1) breiter als das zweite Sichtfeld (FV2) ist.

5. System (10) nach Anspruch 4, wobei das erste Sichtfeld (FV1) kürzer als das zweite Sichtfeld ist.

6. System (10) nach Anspruch 1, wobei sich die erste Empfangseinheit und die zweite Empfangseinheit in einem Fahrzeug befinden.

7. System (10) nach Anspruch 1, wobei das erste Sichtfeld (FV1) und das zweite Sichtfeld (FV2) im Wesentlichen in die gleiche Richtung gerichtet sind.

8. System (10) nach Anspruch 1, ferner aufweisend eine Steuereinheit (16), die programmiert ist, um Licht gleichzeitig von der ersten Lichtquelle (18) und der zweiten Lichtquelle (22) zu emittieren.

9. System (10) nach Anspruch 1, ferner aufweisend ein Gehäuse (14), das den ersten und den zweiten Fotodetektor (20, 24), die erste und die zweite Lichtquelle (18, 22) und das erste und das zweite Bandpassfilter (56, 58) trägt.

10. Verfahren (900), Folgendes aufweisend:

Emittieren (910) von Licht von einer ersten Lichtquelle (18), das auf ein erstes Sichtfeld (FV1) eines ersten Fotodetektors gerichtet ist, und wobei das Licht mit einer ersten Wellenlänge ($\lambda$1) emittiert wird;
Emittieren (910) von Licht von einer zweiten Lichtquelle (22), das auf ein zweites Sichtfeld (FV2) eines zweiten Fotodetektors gerichtet ist, und wobei das Licht mit einer zweiten Wellenlänge ($\lambda$2) emittiert wird, und wobei das zweite Sichtfeld (FV2) das erste Sichtfeld (FV1) überlappt,
Filtern (920) auf Licht mit einer ersten Bandbreite (BW1), das durch die erste Lichtquelle (18) emittiert wird und durch eine reflektierende Oberfläche reflektiert wird, durch ein erstes Bandpassfilter (56), das den ersten Fotodetektor bedeckt, wobei die erste Wellenlänge ($\lambda$1) in der ersten Bandbreite (BW1) liegt;

Filtern (940) auf Licht mit einer zweiten Bandbreite (BW2), das von der zweiten Lichtquelle (22) emittiert wird und von einer reflektierenden Oberfläche reflektiert wird, durch ein zweites Bandpassfilter (58), das den zweiten Fotodetektor bedeckt, wobei die zweite Wellenlänge ($\lambda$2) in der zweiten Bandbreite (BW2) liegt, wobei die zweite Bandbreite (BW2) sich von der ersten Bandbreite (BW1) unterscheidet, Detektieren (930) von Licht in der ersten Bandbreite (BW1), das durch das erste Bandpassfilter (56) hindurchgelassen wird, mit dem ersten Fotodetektor (20); und

Detektieren von Licht in der zweiten Bandbreite (BW2), das durch das zweite Bandpassfilter (58) hindurchgelassen wird, mit dem zweiten Fotodetektor (24).

11. Verfahren (900) nach Anspruch 10, wobei Emittieren (910) von Licht von der ersten Lichtquelle (18) und Emittieren (910) von Licht von der zweiten Lichtquelle (22) im Wesentlichen gleichzeitig erfolgen.

12. Verfahren (900) nach Anspruch 10, wobei eine Differenz zwischen der Mittenwellenlänge einer Wellenlängenkurve des zweiten Bandpassfilters (58) und der Mittenwellenlänge einer Wellenlängenkurve des ersten Bandpassfilters (56) plus der Halbwertsbreite der Wellenlängenkurve des von der ersten Lichtquelle (18) emittierten Lichts größer als die Halbwertsbreite der Wellenlängenkurve des ersten Bandpassfilters (56) ist.

13. Verfahren (90) nach Anspruch 10, wobei die erste Lichtquelle (18) und die zweite Lichtquelle (22) gepulstes Laserlicht emittieren.

14. System (10) nach einem der Ansprüche 1 bis 7 oder Anspruch 9, ferner Folgendes aufweisend: eine Steuereinheit (16), die programmiert ist zum:

im Wesentlichen gleichzeitigen Emittieren einen Lichtpulses von der ersten Lichtquelle und der zweiten Lichtquelle;

Aktivieren des ersten Fotodetektors und Deaktivieren des zweiten Fotodetektors während eines ersten Zeitraums; und

Aktivieren des zweiten Fotodetektors und Deaktivieren des ersten Fotodetektors während eines zweiten Zeitraums, wobei der zweite Zeitraum nach dem ersten Zeitraum initiiert wird.

15. System (10) nach Anspruch 14, wobei der erste Zeitraum gleichzeitig mit der Emission von Licht von der ersten und der zweiten Lichtquelle (18, 22) initiiert wird.

16. System nach Anspruch 14, wobei sich der erste Zeitraum und der zweite Zeitraum überlappen.

17. Verfahren (900) nach Anspruch 11, ferner Folgendes aufweisend:
Aktivieren des ersten Fotodetektors (20) und Deaktivieren des zweiten Fotodetektors (24) während eines ersten Zeitraums.

18. Verfahren (900) nach Anspruch 17, wobei die erste Zeitdauer gleichzeitig mit der Emission von Licht von der ersten und der zweiten Lichtquelle (18, 22) initiiert wird.

19. Verfahren (900) nach Anspruch 17, wobei sich der erste Zeitraum und der zweite Zeitraum überlappen.

**Revendications**

1. Système (10) comprenant :

un premier photodétecteur (20) ayant un premier champ de vision (FV1) ;
un deuxième photodétecteur (24) ayant un deuxième champ de vision (FV2) chevauchant le premier champ de vision ;
une première source de lumière (18) pointée vers le premier champ de vision (FV1) ;
une deuxième source de lumière (22) pointée vers le deuxième champ de vision (FV2) ; et
un premier filtre passe-bande (56) couvrant le premier photodétecteur (20) et un deuxième filtre passe-bande (58) couvrant le deuxième photodétecteur (24), le premier filtre passe-bande (56) étant conçu pour transmettre la lumière dans une première bande passante (BW1) et le deuxième filtre passe-bande (58) étant conçu pour transmettre la lumière dans une deuxième bande passante (BW2) différente de la première bande passante (BW1),
dans lequel la première source de lumière (18) est conçue pour émettre de la lumière ayant une première longueur d'onde ($\lambda$1) dans la première bande passante (BW1) et la deuxième source de lumière (22) est conçue pour émettre de la lumière ayant une deuxième longueur d'onde ($\lambda$2) dans la deuxième bande passante (BW2).

2. Système (10) selon la revendication 1, dans lequel la somme d'une différence entre la longueur d'onde centrale d'une courbe de longueurs d'onde du deuxième filtre passe-bande (58) et la longueur d'onde centrale d'une courbe de longueurs d'onde du premier filtre passe-bande (56) et de la largeur à mi-hauteur de la courbe de longueurs d'onde de la lumière émise par la première source de lumière (20) est supérieure à la largeur à mi-hauteur de la courbe de longueurs d'onde du premier filtre passe-bande (56).

3. Système (10) selon la revendication 1, dans lequel les première et deuxième sources de lumière (18, 22) sont conçues pour émettre de la lumière laser pulsée.

4. Système (10) selon la revendication 1, dans lequel le premier champ de vision (FV1) est plus large que le deuxième champ de vision (FV2).

5. Système (10) selon la revendication 4, dans lequel le premier champ de vision (FV1) est plus court que le deuxième champ de vision.

6. Système (10) selon la revendication 1, dans lequel la première unité de réception et la deuxième unité de réception se trouvent sur un véhicule.

7. Système (10) selon la revendication 1, dans lequel le premier champ de vision (FV1) et le deuxième champ de vision (FV2) sont pointés sensiblement dans la même direction.

8. Système (10) selon la revendication 1, comprenant en outre un contrôleur (16) programmé pour émettre de la lumière simultanément depuis la première source de lumière (18) et la deuxième source de lumière (22).

9. Système (10) selon la revendication 1, comprenant en outre un boîtier (14) supportant les premier et deuxième photodétecteurs (20, 24), les première et deuxième sources de lumière (18, 22), et les premier et deuxième filtres passe-bande (56, 58).

10. Procédé (900) comprenant :

l'émission (910) de lumière depuis une première source de lumière (18) pointée vers un premier champ de vision (FV1) d'un premier photodétecteur et dans lequel la lumière est émise à une première longueur d'onde ($\lambda$1) ;
l'émission (910) de lumière depuis une deuxième source de lumière (22) pointée vers un deuxième champ de vision (FV2) d'un deuxième photodétecteur et dans lequel la lumière est émise à une deuxième longueur d'onde ($\lambda$2) et dans lequel le deuxième champ de vision (FV2) chevauche le premier champ de vision (FV1) ;
le filtrage (920), par un premier filtre passe-bande (56) couvrant le premier photodétecteur, dans une première bande passante (BW1), de la lumière qui est émise par la première source de lumière (18) et réfléchie par une surface réfléchissante, dans lequel la première longueur

d'onde ($\lambda$1) se trouve dans la première bande passante (BW1) ;
le filtrage (940), par un deuxième filtre passe-bande (58) couvrant le deuxième photodétecteur, dans une deuxième bande passante (BW2), de la lumière qui est émise par la deuxième source de lumière (22) et réfléchie par une surface réfléchissante, dans lequel la deuxième longueur d'onde ($\lambda$2) se trouve dans la deuxième bande passante (BW2), la deuxième bande passante (BW2) étant différente de la première bande passante (BW1) ;
avec le premier photodétecteur (20), la détection (930) de la lumière dans la première bande passante (BW1) transmise par le premier filtre passe-bande (56) ; et
avec le deuxième photodétecteur (24), la détection de la lumière dans la deuxième bande passante (BW2) transmise par le deuxième filtre passe-bande (58).

11. Procédé (900) selon la revendication 10, dans lequel l'émission (910) de lumière depuis la première source de lumière (18) et l'émission (910) de lumière depuis la deuxième source de lumière (22) sont sensiblement simultanées.

12. Procédé (900) selon la revendication 10, dans lequel la somme d'une différence entre la longueur d'onde centrale d'une courbe de longueurs d'onde du deuxième filtre passe-bande (58) et la longueur d'onde centrale d'une courbe de longueurs d'onde du premier filtre passe-bande (56) et de la largeur à mi-hauteur de la courbe de longueurs d'onde de la lumière émise par la première source de lumière (18) est supérieure à la largeur à mi-hauteur de la courbe de longueurs d'onde du premier filtre passe-bande (56).

13. Procédé (90) selon la revendication 10, dans lequel la première source de lumière (18) et la deuxième source de lumière (22) émettent de la lumière laser pulsée.

14. Système (10) selon l'une quelconque des revendications 1 à 7 ou la revendication 9, comprenant en outre :
un contrôleur (16) programmé pour :

émettre de façon sensiblement simultanée une impulsion de lumière depuis la première source de lumière et la deuxième source de lumière ;
pendant un premier laps de temps, activer le premier photodétecteur et désactiver le deuxième photodétecteur ; et
pendant un deuxième laps de temps, activer le deuxième photodétecteur et désactiver le premier photodétecteur, le deuxième laps de temps commençant après le premier laps de temps.

15. Système (10) selon la revendication 14, dans lequel le premier laps de temps commence en même temps que l'émission de lumière depuis les première et deuxième sources de lumière (18, 22).

16. Système selon la revendication 14, dans lequel le premier laps de temps et le deuxième laps de temps se chevauchent.

17. Procédé (900) selon la revendication 11, comprenant en outre :
pendant un premier laps de temps, l'activation du premier photodétecteur (20) et la désactivation du deuxième photodétecteur (24).

18. Procédé (900) selon la revendication 17, dans lequel le premier laps de temps commence en même temps que l'émission de lumière depuis les première et deuxième sources de lumière (18, 22).

19. Procédé (900) selon la revendication 17, dans lequel le premier laps de temps et le deuxième laps de temps se chevauchent.

FIG. 1

*FIG. 2*

*FIG. 3*

*FIG. 4*

FIG. 5

FIG. 7

FIG. 6

FIG. 8

900

Simultaneously Emitting Light
from the First, Second and
Third Light Sources — 910

Filtering Light Received by
First Receiving Unit — 920

Detecting Filtered Light
Received by the
First Receiving Unit — 930

Filtering Light Received by
Second Receiving Unit — 940

Detecting Filtered Light
Received by
Second Receiving Unit — 950

Filtering Light Received
by Third Receiving Unit — 960

Detecting Filtered Light
Received by
Third Receiving Unit — 970

Determining Location and
Distance of Reflected Object — 980

*FIG. 9*

FIG. 11

FIG. 10

~1200

| Simultaneously Emitting Light from the First and Second Light Sources | ~1210 |

| Starting the Clock | ~1220 |

| During a First Time Period, Activating the First Photo Detector and Deactivating the Second Photodetector | ~1230 |

| During a Second Time Period, Deactivating the First Photo Detector and Activating the Second Photodetector | ~1240 |

| Determining Location and Distance of Reflected Object | ~1250 |

*FIG. 12*